# EUROPÄISCHE PATENTSCHRIFT

(11) **EP 2 338 189 B1**
(45) Veröffentlichungstag und Bekanntmachung des Hinweises auf die Patenterteilung: **19.09.2012**
(21) Anmeldenummer: 09752725.3
(22) Anmeldetag: 16.10.2009
(51) Int. Cl.: H01M 2/10, H01M 6/46, H01M 10/50

(54) **HALTE- UND KÜHLUNGSVORRICHTUNG UND VERFAHREN ZUR HERSTELLUNG EINER HALTE- UND KÜHLUNGSVORRICHTUNG**
HOLDING AND COOLING DEVICE AND METHOD FOR MANUFACTURING A HOLDING AND COOLING DEVICE
DISPOSITIF DE RETENUE ET DE REFROIDISSEMENT ET PROCÉDÉ POUR PRODUIRE UN DISPOSITIF DE RETENUE ET DE REFROIDISSEMENT

(30) Priorität: 16.10.2008 DE 102008051897
(43) Veröffentlichungstag der Anmeldung: 29.06.2011
(73) Patentinhaber: Behr GmbH & Co. KG, 70469 Stuttgart (DE)
(72) Erfinder: SCHMID, Caroline, 70186 Stuttgart (DE); ISERMEYER, Tobias, 74245 Löwenstein (DE); WIEBELT, Achim, 71711 Steinheim (DE); MOSER, Michael, 73492 Rainau (DE); NEFF, Heiko, 70435 Stuttgart (DE); KOHLBERGER, Markus, 70174 Stuttgart (DE)
(74) Vertreter: Grauel, Andreas
(86) Internationale Anmeldenummer: PCT/EP2009/007434
(87) Internationale Veröffentlichungsnummer: WO 2010/043405

(56) Entgegenhaltungen:
- WO-A1-2008/078586
- WO-A1-2009/018941
- DE-A1-102008 016 936
- JP-A- 8 321 329
- US-A- 5 756 227

## Beschreibung

Die vorliegende Erfindung bezieht sich auf eine Halte- und Kühlungsvorrichtung gemäß Anspruch 1 sowie auf ein Verfahren zur Herstellung einer Halte- und Kühlungsvorrichtung gemäß Anspruch 13.

Moderne Hybridelektro- oder Elektrofahrzeuge verwenden leistungsfähige Energiespeicher wie Li-Ionen- oder NiMH-Batterien sowie sogenannte Super-Caps. In diesen Energiespeichern kommt es, bedingt durch den inneren Widerstand, zu einer Erwärmung bei schnellen Lade- oder Entladevorgängen. Zur Vermeidung einer übermäßigen und somit schadhaften Erwärmung der Zellen müssen diese gekühlt werden. Hierfür werden die Batteriezellen durch Fügeverfahren wie etwa Kleben, Nieten, Verstemmen mit den entsprechenden Kühlelementen verbunden.

Die oben genannte Erwärmung führt oberhalb einer bestimmten Temperatur zu einer Verringerung der Leistungsfähigkeit und Lebensdauer der Energiespeicher. Daher ist es notwendig, die Energiespeicher aktiv zu kühlen. Für eine effiziente Kühlung ist hierbei eine gute Anbindung der zu kühlenden Energiespeicher an die Kühlungskomponenten notwendig. Bauart- oder fertigungsbedingte Toleranzen oder Unebenheiten der Energiespeicher führen hierbei zu einer ungleichmäßigen Anbindung, was sich in oben beschriebener Art und Weise negativ auf die Energiespeicher auswirkt.

WO 2008/078586 A zeigt eine Halte-und Kühlungsvorrichtung mit einer Halteplatte mit schlitzförmigen Rillen zum Einstecker der Kühlelement.

Es ist daher die Aufgabe der vorliegenden Erfindung, eine Möglichkeit zur Halterung von Wärmequellen, insbesondere einem Energiespeicherelement, mit einem Ausgleich dieser Toleranzen und dabei eine gleichmäßige und effiziente Kühlung dieser Wärmequelle durch eine gute thermische Anbindung an ein Wärmeabfuhrmedium zu schaffen.

Diese Aufgabe wird durch eine Halte- und Kühlungsvorrichtung gemäß Anspruch 1 sowie ein Verfahren zur Herstellung einer Halte- und Kühlungsvorrichtung gemäß Anspruch 13 gelöst. Günstige Ausgestaltungen werden durch die Unteransprüche definiert.

Die vorliegende Erfindung schafft eine Halte- und Kühlungsvorrichtung für zumindest eine Wärmequelle, insbesondere ein Energiespeicherelement, wobei die Vorrichtung die folgenden Merkmale umfasst:
- eine Halteplatte, die eine Mehrzahl von schlitzförmigen Öffnungen aufweist; und
- zumindest zwei Kühlbleche mit je einem umgeknickten Rand an zumindest einer Seite, wobei die Kühlbleche in je einen der schlitzförmigen Öffnungen der Halteplatte einsteckbar sind und wobei die Kühlbleche ausgebildet sind, um im eingesteckten Zustand mit der Halteplatte eine Aufnahmetasche mit seitlicher thermischer Kontaktierungsmöglichkeit für die Wärmequelle, insbesondere das Energiespeicherelement, bilden.

Ferner schafft die vorliegende Erfindung ein Verfahren zur Herstellung einer Halte- und Kühlungsvorrichtung für zumindest eine Wärmequelle, insbesondere ein Energiespeicherelement, wobei das Verfahren die folgenden Schritte aufweist:
- Bereitstellen einer Halteplatte, die eine Mehrzahl von schlitzförmigen Öffnungen aufweist;
- Bereitstellen von zumindest zwei Kühlblechen mit je einem umgeknickten Rand an zumindest einer Seite, wobei die Kühlbleche in je einen der schlitzförmigen Öffnungen der Halteplatte einsteckbar sind und wobei die Kühlbleche ausgebildet sind, um im eingesteckten Zustand mit der Halteplatte eine Aufnahmetasche mit seitlicher thermischer Kontaktierungsmöglichkeit für die Wärmequelle, insbesondere das Energiespeicherelement, bilden; und
- Einstecken der Kühlbleche in unterschiedliche schlitzförmige Öffnungen der Halteplatte bis der umgeknickte Rand der Kühlbleche die Halteplatte berührt, um die Aufnahmetasche für die Wärmequelle, insbesondere das Energiespeicherelement, zu erhalten.

Der vorliegenden Erfindung liegt die Erkenntnis zugrunde, dass eine stabile Halterung bei gleichzeitig guter Wärmeübertragung durch das Vorsehen einer Halteplatte ermöglicht wird, durch welche Kühlbleche gesteckt werden, um die Wärmequelle, speziell das Energiespeicherelement aufnehmen zu können. Hierbei dient der umgeklappte Rand der Kühlbleche, der im zusammengesteckten Zustand der Halte- und Kühlungsvorrichtung an der Halteplatte anliegt, als Anschlagpunkt und zugleich als Halteklemme, um die Aufnahmetasche für das Energiespeicherelement zu bilden. Zugleich kann über die Seitenflächen der Kühlbleche ein großflächiger Kontaktbereich zur thermischen Kontaktierung des Energiespeicherelementes bereitgestellt werden, so dass auch eine gute Wärmeabfuhr von dem Energiespeicherelement über die Kühlbleche zu dem umgeknickten Rand der Kühlbleche erfolgt, wobei dieser umgeknickte Rand im zusammengesteckten Zustand der Halte- und Kühlungsvorrichtung auf einer dem Energiespeicherelement abgewandten Seite der Halteplatte angeordnet ist. Beispielsweise kann dann ferner die Halteplatte auf einer Grundplatte befestigt sein, die selbst wiederum auf einer Kühlplatte befestigt ist, so dass auch eine gute weitere Wärmeabfuhr von dem umgeknickten Rand der Kühlbleche über die Grund- und Kühlplatte möglich wird.

Die vorliegende Erfindung bietet den Vorteil, dass die Halte- und Kühlungsmöglichkeit durch sehr einfache und damit kostengünstige Bauelemente hergestellt werden kann. Zugleich ist durch die seitliche thermische Kontaktierungsmöglichkeit der Energiespeicherelemente an die Kühlbleche eine sehr große Kontaktfläche zwischen Energiespeicherelement und Kühlblechen gegeben, wodurch eine schnelle und effiziente Wärmeabfuhr möglich ist. Durch den umgeklappten oder- geknickten Rand der Kühlbleche, der an einer "Unterseite" der Halteplatte von einem weiteren Wärmeübertragungselement (wie der Grundplatte) kontaktierbar ist, kann außerdem ein sehr guter Wärmeabtransport von dem Energiespeicherelement weg erfolgen, da lediglich eine geringe Anzahl von Wärmekopplungen bzw. -übertragungen zwischen unterschiedlichen Wärmeübertragungselementen erforderlich ist. Eine Wärmeübertragung erfolgt somit unter Verwendung einer möglichst geringen Anzahl von Wärmeleitelemente.

Wenn eine Halterung und Kühlung von einer Mehrzahl von Energiespeicherelementen beabsichtig ist, ist es vorteilhaft, wenn zumindest zwei weitere Kühlbleche mit einem umgeknickten Rand vorgesehen sind, die in die schlitzförmigen Öffnungen der Halteplatte einsteckbar sind, wobei sich im eingesteckten Zustand in der Halteplatte zumindest zwei Kühlbleche (beispielsweise rückseitig) berühren. Dies bietet den Vorteil einer kompakten und stabilen Halterung der Energiespeicherelemente, da sich bereits die Kühlbleche der einzelnen Aufnahmetaschen gegenseitig stützen.

Auch können die Kühlbleche an zumindest zwei, vorzugsweise drei Seiten einen umgeknickten Rand aufweisen. Dieser Rand, der beispielsweise (wie der bereits vorstehend genannte Rand eines Kühlbleches auch) in L-Form ausgebildet ist, verleiht dem Kühlblech eine "innere" Stabilität, so dass die auszuformende Aufnahmetasche auch ohne weitere Elemente sehr stabil ist. Zugleich kann eine Führung durch die seitlichen umgeklappten Ränder des Kühlblechs in der Halteplatte als eine zusätzliche Stabilisierung der Halte- und Kühlungsvorrichtung wirken. Auch kann ein Herausrutschen der Wärmequelle durch die weiteren umgeknickten Ränder der Kühlbleche weiter verhindert bzw. deutlich erschwert werden.

In einer besonderen Ausführungsform der Erfindung können die schlitzförmigen Öffnungen in der Halteplatte zumindest teilweise eine Form des Buchstabens H aufweisen. Dies bietet eine sehr stabile und vor allem kompakte Einsteckmöglichkeit für die Kühlbleche, die hierdurch beispielsweise auch "Rücken-an-Rücken" in die schlitzförmigen Öffnungen eingesteckt werden können. Dies ermöglicht auch einen schnellen Abtransport von Wärme über solche eng beisammen liegenden Kühlbleche, wenn von einer Wärmequelle mehr Wärme abzuführen ist, als von einer anderen Wärmequelle.

Um eine gute Ausgleichsmöglichkeit gegenüber Fertigungstoleranzen beim Einfügen der Wärmequelle, insbesondere eines Energiespeicherelementes, zu haben, kann eine schlitzförmige Öffnung in der Mitte der Halteplatte eine geringere Öffnungsbreite aufweisen als eine schlitzförmige Öffnung am Rand der Halteplatte. Hierdurch können zuerst die Aufnahmetaschen im mittleren Bereich der Halteplatte bestückt werden. Ein Verklemmen der Kühlbleche auf Grund einer Summation der Toleranzen der einzelnen Bauelemente und damit einhergehende Schwierigkeiten bei der Bestückung von im äußeren Bereich der Halteplatte angeordneten Aufnahmetaschen kann hierdurch größtenteils vermieden werden, da die Aufnahmetaschen, die am Rand der Halteplatte gebildet werden, diese Toleranzen durch ein größeres Spiel ausgleichen können.

Um eine gute Stabilität bei der Bestückung aller Aufnahmetaschen der Halte-und Kühlungsvorrichtung zu erreichen, sollten die Öffnungsbreiten von schlitzförmigen Öffnungen von der Mitte der Halteplatte zu einem Rand der Halteplatte hin zunehmend größer werden. Hierdurch kann sichergestellt werden, dass die in den entsprechenden Bereichen der Halteplatte mit den Kühlblechen zu bildenden die Aufnahmetaschen ausreichend (aber nicht zu viel) Spiel zum Ausgleich von Herstellungstoleranzen der Energiespeicherelemente haben.

Eine sehr gute und schnelle Wärmeabfuhr kann dann sichergestellt werden, wenn eine Grundplatte vorgesehen ist, an der die Halteplatte, insbesondere unter Verwendung einer Schraubverbindung befestigbar ist. Dies bietet nicht nur eine gute thermische Kontaktierungsmöglichkeit zwischen den (umgeknickten Rändern der) Kühlungsbleche(n) und der Grundplatte sondern die Stabilität der Halte- und Kühlungsvorrichtung kann zusätzlich erhöht werden, da die Grundplatte durch deren Befestigung auf der der Wärmequellen abgewandten Seite ein Herausfallen der Kühlbleche aus der Halte- und Kühlungsvorrichtung effektiv verhindert, insbesondere dann, wenn die Aufnahmetaschen noch nicht bestückt wurden.

Besonders gut kann eine Wärme von der Wärmequelle, speziell dem Energiespeicherelement abgeführt werden, wenn die Kühlbleche und/oder die Grundplatte ein Metall, insbesondere Aluminium enthalten.

Eine sehr einfache und damit kostengünstige Herstellung der Halteplatte ist dann möglich, wenn diese ein Metall oder Kunststoff enthält. Hierdurch, insbesondere bei der Verwendung von Kunststoff aus Ausgangsmaterial für die Halteplatte, kann eine einfach herzustellende und vor allem elektrisch isolierend wirkende Halterung hergestellt werden, da die Halteplatte in erster Linie der Aufnahme und Stützung der Kühlbleche und erst in zweiter Linie der Wärmeabfuhr dient.

Auch kann zur weiter verbesserten Wärmeabfuhr von der Wärmequelle, speziell des Energiespeicherelementes, eine Kühlplatte vorgesehen sein, an der die Grundplatte, insbesondere unter Verwendung einer Schraubverbindung befestigbar ist. Eine solche Kühlplatte, speziell wenn diese durch eine sehr einfache Schraubbefestigung gut mit der Grundplatte thermisch kontaktierbar ist, kann dann einen sehr hohen Temperaturgradienten zwischen den Kühlblechen und der Kühlplatte aufbauen, der einen hohen Wärmeabfluss in Richtung der Kühlplatte sicherstellt.

Zur Verbesserung der Wärmeübertragungsfähigkeit kann zwischen den Kühlblechen und der Grundplatte und/oder zwischen der Grundplatte und der Kühlplatte ein wärmeleitfähiges Material, insbesondere zumindest eine Folie oder Wärmeleitpaste angeordnet sein.

Zur Erhöhung der Stabilität kann ferner ein Spannrahmen vorgesehen sein, der ausgebildet ist, um im befestigten Zustand die Kühlbleche seitlich an zumindest eine Wärmequelle, insbesondere ein Energiespeicherelement, zu drücken, um einen thermischen Kontakt zwischen den Kühlblechen und der Wärmequelle herzustellen. Zusätzlich wirkt sich die Verwendung eines solchen Spannrahmens positiv auf die Wärmeübertragungsfähigkeit zwischen den Kühlblechen und der Wärmequelle aus, da durch ein seitliches Zusammendrücken der Kühlbleche eine größere Kontaktfläche zwischen den Kühlblechen und der Wärmequelle entsteht, über die ein Wärmeabtransport möglich ist.

Nachfolgend werden einzelne Ausführungsbeispiele der vorliegenden Erfindung Bezug nehmend auf die beiliegenden Zeichnungen näher erläutert. Es zeigen:
- Fig. 1: eine Darstellung eines Ausführungsbeispiels der vorliegenden Erfindung, in dem die Halte- und Kühlungsvorrichtung mit Energiespeicher elementen bestückt, mit einer Spannvorrichtung verspannt und auf einer Grundplatte befestigt ist;
- Fig. 2: eine Darstellung eines beispielhaft verwendbaren Energiespeicherelementes als Wärmequelle;
- Fig. 3: eine Darstellung einer für die Erfindung beispielhaft verwendbaren Halteplatte;
- Fig. 4: eine Darstellung eines für die Erfindung beispielhaft verwendbaren Kühlbleches mit umgeknicktem Rand;
- Fig. 5: eine Darstellung einer für die Erfindung beispielhaft verwendbaren Grundplatte;
- Fig.6: eine Darstellung eines schichtweisen Aufbaus einer Kühlplatte, die für die vorliegende Erfindung gemäß einem Ausführungsbeispiel verwendbar ist;
- Fig. 7: eine Darstellung eines Spannrahmens, der für die Umsetzung der vorliegenden Erfindung in einem weiteren Ausführungsbeispiel verwendbar ist;
- Fig. 8: eine Explosionsdarstellung des Aufbaus eines Ausführungsbeispiels der vorliegenden Erfindung;

- Fig. 9: eine Darstellung eines Gesamtaufbaus eines Ausführungsbeispiels der vorliegenden Erfindung, bei der mehrere Module eines Ausführungsbeispiels verwendet werden; und
- Fig. 10: ein Ablaufdiagramm eines Ausführungsbeispiels der vorliegenden Erfindung als Verfahren.

In der nachfolgenden Beschreibung der günstigen Ausführungsbeispiele der vorliegenden Erfindung werden für die in den verschiedenen Zeichnungen dargestellten und ähnlich wirkenden Elemente gleiche oder ähnliche Bezugszeichen verwendet, wobei auf eine wiederholte Beschreibung dieser Elemente verzichtet wird. Die beschriebenen Ausführungsbeispiele sind nur beispielhaft gewählt und können miteinander kombiniert werden.

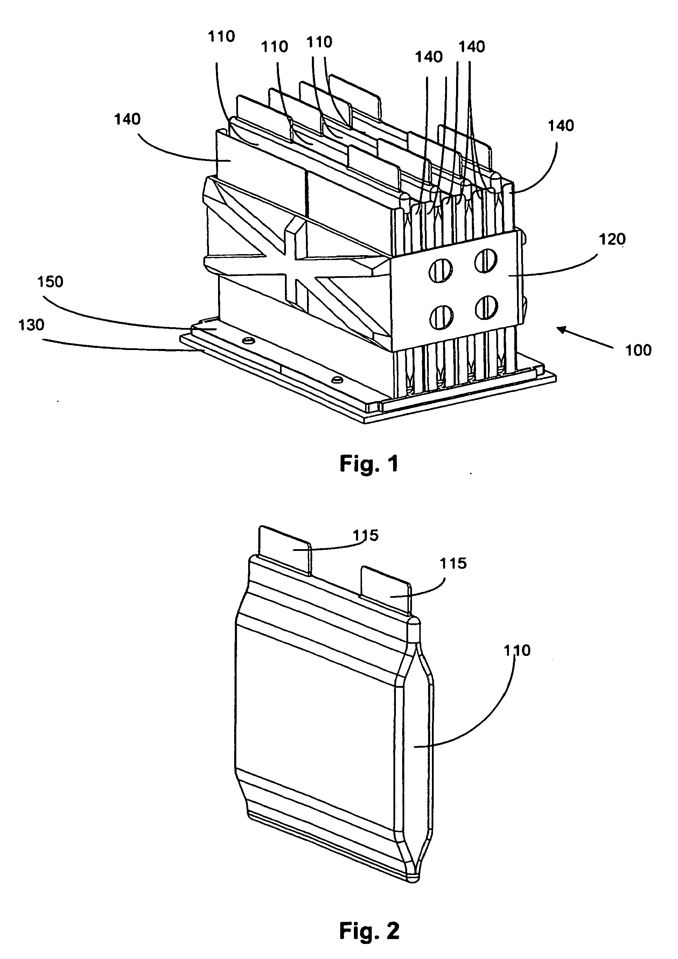

Fig. 1 zeigt eine Darstellung eines Ausführungsbeispiels der vorliegenden Erfindung, in dem die Halte- und Kühlvorrichtung 100 mit Energiespeicherelementen 110 (die beispielsweise mit nach oben ragenden Kontaktanschlüssen 115 entsprechend der Darstellung aus Fig. 2 aufgebaut sind) bestückt, mit einer Spannvorrichtung bzw. einem Spannrahmen 120 verspannt und auf einer Grundplatte 130 befestigt ist. Hierbei sind Kühlbleche 140 in einer Halteplatte 150 eingesteckt. Die Kühlbleche 140 sind dabei derart in der Halteplatte 150 angeordnet, dass zwei Kühlbleche 140, die an seitlichen Rändern (beispielsweise L-förmig) abgeknickt sind, Aufnahmetaschen für die Energiespeicherelemente 110 (die im hier beschriebenen Ausführungsbeispiel die zu kühlenden Wärmequellen darstellen) ausbilden. Durch den aufgebrachten Spannrahmen 120 werden die Kühlbleche 140 seitlich an die Energiespeicherelemente 110 gedrückt, so dass eine große Fläche zur Wärmeübertragung zwischen den Kühlblechen 140 und den Energiespeicherelementen 110 ausgebildet werden kann.

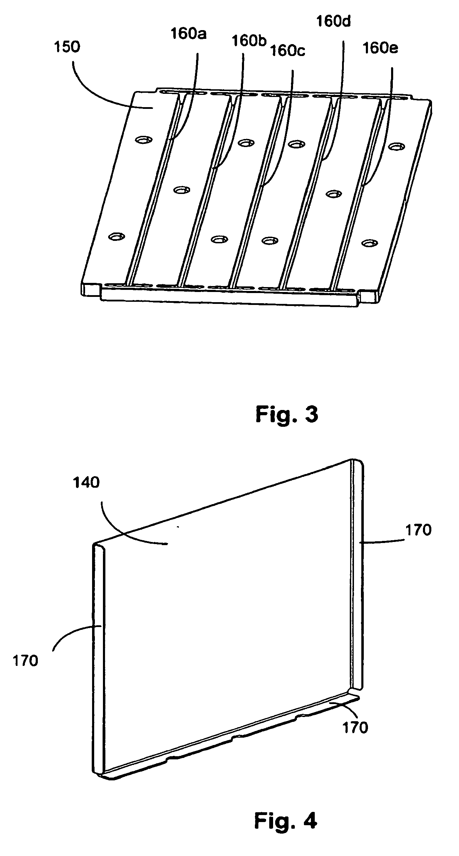

Einzelne Module der Halte- und Kühlungsvorrichtung 100 können zum Beispiel aus drei verschiedenen Bauteilen aufgebaut werden: den Kühlblechen 140 zwischen den (Energiespeicher-)Zellen 110, einer Halteplatte 150 sowie einer Grundplatte 130. Die Halteplatte 150, die beispielhaft in Fig. 3 dargestellt ist, weist schlitzförmige Öffnungen 160a-e auf, die H-förmig ausgestaltet sein können. Durch diese schlitzförmigen Öffnungen können (beispielsweise von unten) die Kühlbleche 140 eingesteckt werden, die in Fig. 4 beispielhaft dargestellt sind. Hierbei habe die Kühlbleche zumindest einen, besser zwei oder drei L-förmig umgeknickte Ränder 170, wobei derjenige Rand 170, der einer Seite ohne umgeknickten Rand gegenüberliegt, im eingesteckten Zustand möglichst ganzflächig an der Halteplatte 150 aufliegt. Um einen notwendigen Toleranzausgleich der Dicke der (Energiespeicher-) Zellen 110 zu erzielen sind einzelne Schlitze 160a-e in die Halteplatte 150 integriert und unterschiedlich breit. Dabei ist der mittlere Schlitz 160c der Halteplatte 150 eng toleriert (und damit schmal gegenüber weiteren Schlitzen, z.B. den Schlitzen 160a und 160e) und stellt den Anschlagspunkt für die Montage dar. Die Bestückung der durch die Kühlbleche 140 gebildeten Aufnahmetaschen sollte somit bei einer Aufnahmetasche beginnen, die durch Kühlbleche 140 gebildet wird, von denen zumindest eines in die mittlere schlitzförmige Öffnung 160c gesteckt ist. Alle weiteren Schlitze 160a-b und 160d-e sind in ihrer Reihenfolge zum Rand hin größer toleriert um eine Verschiebung der Kühlbleche 140 entsprechend der Toleranz der einzelnen Batteriezellen 110 sicherzustellen.

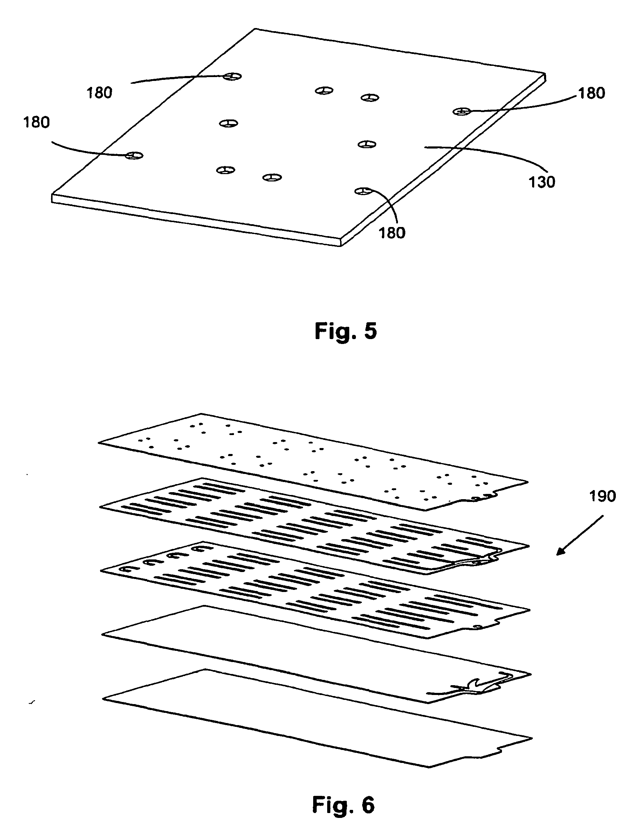

Die Halteplatte 150 kann dann auf einer Grundplatte 130 befestigt werden. Eine solche Grundplatte 130, die für die Realisierung der Erfindung verwendbar ist, ist beispielhaft in der Fig. 5 dargestellt. Hierzu kann eine Schraubverbindung unter Verwendung der in der Halteplatte 150 und der Grundplatte 130 vorgesehenen Löcher 180 verwendet werden. Die Verwendung einer Schraubverbindung zur Befestigung weist den Vorteil auf, dass durch die (meist metallischen) Schrauben ein gleichmäßiger Anpressdruck zwischen Grundplatte 130 und Kühlblechfuß 170, sowie zwischen Grundplatte 130 und Kühlplatte 190 vorliegt und somit eine sehr gute Wärmeübertragung möglich ist.

Aufgrund der wärmeleitenden Funktion sollte hinsichtlich der Materialauswahl günstigerweise ein thermisch gut leitfähiges Material wie beispielsweise ein Metall, insbesondere Aluminium für die Kühlbleche 140 und die Grundplatte 130 verwendet werden. Die Halteplatte 150 hingegen dient insbesondere strukturellen Zwecken und kann entweder aus Metall oder zur Verbesserung der elektrischen Isolierung aus Kunststoff hergestellt werden. Die Materialdicke der Halte-150 oder Grundplatte 130 richtet sich in allen Fällen nach den thermischen oder strukturellen Anforderungen.

Ferner kann die Grundplatte 130 an einer Kühlplatte 190 befestigt werden, um durch die aktive Kühlung der Kühlplatte 190 eine Erhöhung des Temperaturgradienten zu erhalten. Hierdurch wird ein schneller Wärmeabfluss von den Energiespeicherelementen 110 über die Kühlbleche 140, die Grundplatte 130 sowie die Kühlplatte 190 erreicht. Die Kühlplatte 190 kann dabei in einer Schichtbauweise entsprechend der Fig. 6 aufgebaut sein, um in den Kanälen in den einzelnen Schichten ein Kühl- oder Kältemittel zu führen, welches Wärme aufnehmen und abtransportieren kann.

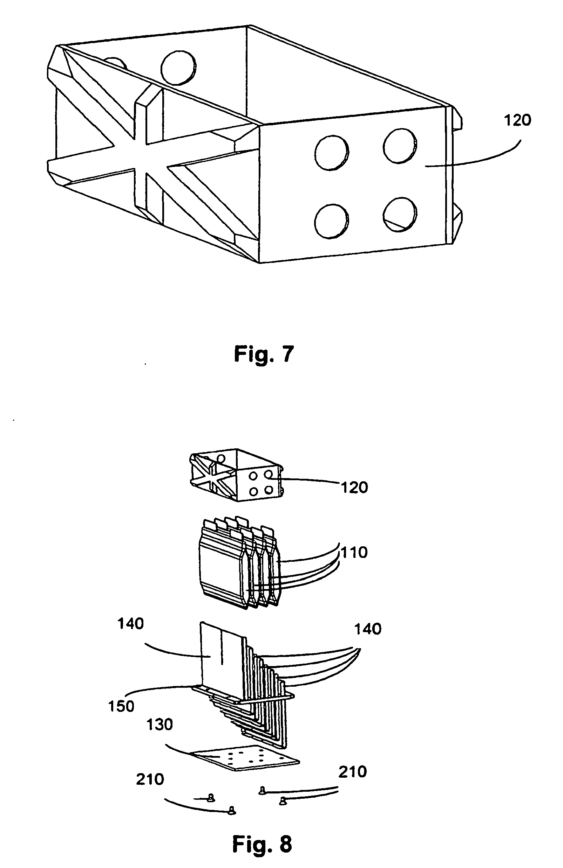

Schließlich kann die Halte- und Kühlvorrichtung noch einen vorstehend bereits genannten Spannrahmen 120 umfassen, der beispielhaft in Fig. 7 dargestellt ist. Der Spannrahmen 120 kann im Wesentlichen aus einem Metallgestell bestehen, welches seitliche Verstrebungen zur Erhöhung der mechanischen Stabilität aufweist. Der Spannrahmen 120 kann über die in der Halteplatte 150 eingesteckten und mit Energiespeicherelementen 110 bestückten Kühlbleche 140 geschoben werden, wodurch sich ein seitlicher Druck auf die Kühlbleche 140 und die Energiespeicherelemente 110 aufbaut. Durch diesen seitlichen Druck auf die Kühlbleche 140 wird die vorstehend bereits genannte möglichst große Wärmeübertragungsfläche zwischen den Energiespeicherelementen 110 und den Kühlblechen 140 erreicht.

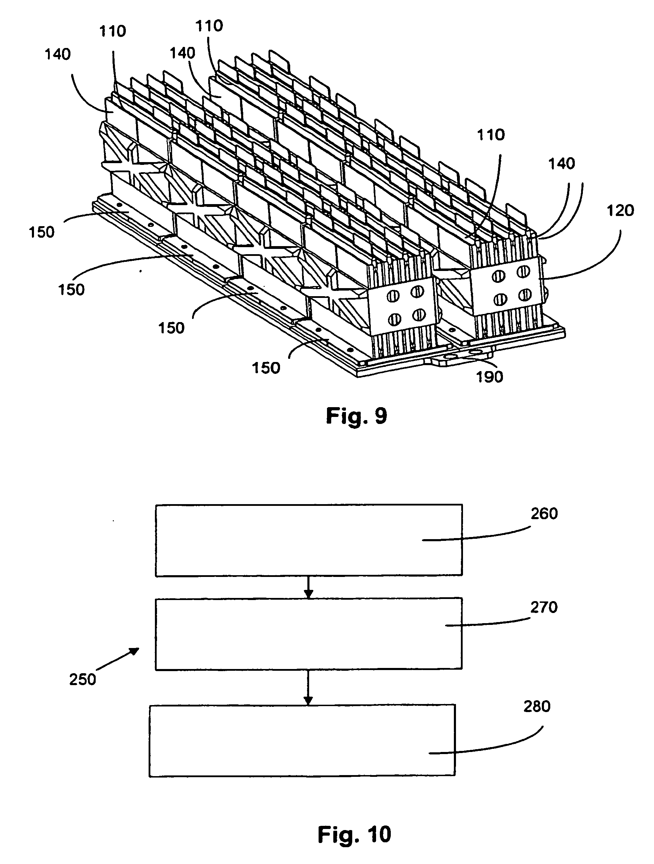

Zum Ausgleich eventuell auftretenden Unebenheiten können wärmeleitfähige Materialien wie Folien, Wärmeleitpasten oder ähnliches an denjenigen Stellen eingefügt werden, an denen eine Wärmeübertragung stattfinden soll. Insbesondere wären an hier die thermischen Kontakte zwischen den (umgeknickten Rändern der) Kühlbleche(n) 140 und der Grundplatte 130 und die thermischen Kontakte zwischen der Grundplatte 130 und der Kühlplatte 190 zu nennen. Anhand der Fig. 8, die eine Explosionsdarstellung des Aufbaus eines Ausführungsbeispiels der vorliegenden Erfindung wiedergibt, kann das Vorgehen bei der Montage eines weiteren Ausführungsbeispiels der Erfindung nochmals zusammenfassend erläutert werden. Bei der Montage der Module werden zunächst die einzelnen Kühlbleche 140 durch Schlitze 160 in der Halteplatte 150 bis zur Anlage der L-förmigen Umkantung 170 der Kühlbleche 140 an der Halteplatte 150 durchgesteckt. Im Anschluss wird die Grundplatte 130 unter geringer Kraft mittels Schrauben 210 montiert, sodass eine Verschiebung der Kühlbleche 140 möglich ist. In die Zwischenräume der Kühlbleche 140 werden die Batteriezellen 110 eingesetzt und anschließend der gesamte Aufbau mit oben genannter Spannvorrichtung 120 auf Block (d.h. allein durch Zusammendrücken der Energiespeicherelemente 110 mit den dazwischenliegenden Kühlblechen 140 und dem nachfolgenden Überschieben des Spannrahmens 120 ohne dem Verwenden von weiteren Befestigungsmitteln) zusammengespannt. Durch Anziehen der Schrauben 210 wird ein fester Verbund zwischen der Halteplatte 150, den Kühlblechen 140 und der Grundplatte 130 und somit eine gute thermische Kontaktierung erzielt. Die somit vormontierten Einzelmodule können wiederum (beispielsweise über Zugschrauben) mit der (in Fig. 8 nicht dargestellten) Kühlplatte 190 verbunden. Dabei erfolgt der Kraftschluss durch alle Ebenen des Aufbaus hindurch direkt mit der Halteplatte 150. Hierdurch kann (bei einem Verbau von mehreren der vorstehend hergestellten Halte- und Kühlungsvorrichtungsmodule) ein Gesamtverbund einer Halte- und Kühlungsvorrichtung 100 erhalten werden, wie er beispielsweise in Fig. 9 abgebildet ist. In einem solchen Gesamtverbund können die einzelnen Halte- und Kühlungsvorrichtungen in Reihen nebeneinander und mehrere solcher Reihen parallel auf einer gemeinsamen Kühlplatte 190 angeordnet sein, so dass die Kühlplatte 190 eine möglichst viel Wärme abtransportieren kann.

Die vorliegende Erfindung kann in der dargestellten Form für ähnliche Anwendungen verwendet werden. Die notwendigen Vorspannkräfte können dabei in anderen denkbaren Formen, beispielsweise durch entsprechende Spann- oder Dehnelemente aufgebracht werden. Die konstruktive Auslegung der einzelnen Bauteile oder Kontaktflächen ist abhängig vom jeweiligen Anwendungsfall und kann hierbei so oder in abgewandelter Form zur Anwendung kommen. Die einzelnen Bauteile können Ihrer Funktion entsprechend ausgebildet werden um beispielsweise einen hohen Wärmefluss, optimale Kontaktierung oder hohe Steifigkeit zu erzielen.

Zusammenfassend ist anzumerken, dass sich der vorgeschlagene Ansatz insbesondere für die Kühlung von Energiespeicherelementen 110 wie Batteriezellen eignet, wobei eine Verwendung von sogenannten Hard-Cases, als auch "Coffee-Bag"-Zellen möglich ist, die einen Aufbau oder eine äußere Form gemäß der exemplarischen Darstellung aus Fig. 2 haben. Die Kühlung erfolgt hierbei über die Seitenflächen der Zellen 110 und die entstehende Wärme wird über die Kühlbleche 140 thermisch in eine Kühlplatte 190 geleitet, die beispielsweise aus mehreren Schichten gemäß der Darstellung aus Fig. 6 gebildet ist. Zur Isolierung der Abmessungstoleranzen werden die einzelnen Zellen 110 mit den Kühlblechen 140 montiert und über eine Spannvorrichtung 120 verspannt. Zur Verbesserung der Wartungsfreundlichkeit werden die Batteriezellen jeweils zu einzelnen Modulen von Halte- und Kühlungsvorrichtungen 100 zusammengefasst. Die Anzahl ist hierbei abhängig von den zu beachtenden Randbedingungen, wie bspw. Gesamtzellenzahl, logistischer Aufwand, Kostenoptimierung, etc.

Der hier vorgestellte Ansatz bietet dabei den Vorteil, dass verschiedene, auftretende Toleranzen und geometrische Unebenheiten aufgeteilt und durch geeignete Maßnahmen ausgeglichen werden können. Dies ermöglicht eine gute thermische Kontaktierung und eine daraus resultierende verbesserte Kühlung bei gleichzeitiger Demontierbarkeit, welche möglicherweise für einen notwendigen Austausch der Energiespeicherelemente 110 vorteilhaft ist.

In Fig. 10 ist ein Ablaufdiagramm eines Verfahrens 250 zur Herstellung einer Halte- und Kühlungsvorrichtung für zumindest eine Wärmequelle, insbesondere ein Energiespeicherelement wiedergegeben. Das Verfahren 250 umfasst dabei einen ersten Schritt des Bereitstellens 260 einer Halteplatte, die eine Mehrzahl von schlitzförmigen Öffnungen aufweist. In einem weiteren Schritt erfolgt ein Bereitstellen 270 von zumindest zwei Kühlblechen mit je einem umgeknickten Rand an zumindest einer Seite, wobei die Kühlbleche in je einen der schlitzförmigen Öffnungen der Halteplatte einsteckbar sind und wobei die Kühlbleche im eingesteckten Zustand mit der Halteplatte eine Aufnahmetasche mit seitlicher thermischer Kontaktierungsmöglichkeit für die Wärmequelle, insbesondere das Energiespeicherelement, bilden. Schließlich erfolgt in einem weiteren Schritt ein Einstecken 280 der Kühlbleche in unterschiedliche schlitzförmige Öffnungen der Halteplatte bis der umgeknickte Rand der Kühlbleche die Halteplatte berührt, um die Aufnahmetasche für die Wärmequelle, insbesondere das Energiespeicherelement, zu erhalten.

## Patentansprüche

1. Halte- und Kühlungsvorrichtung (100) für zumindest eine Wärmequelle, insbesondere ein Energiespeicherelement (110), wobei die Vorrichtung (100) die folgenden Merkmale umfasst:
- eine Halteplatte (150), die eine Mehrzahl von schlitzförmigen Öffnungen (160a-e) aufweist; und
- zumindest zwei Kühlbleche (140) mit je einem umgeknickten Rand (170) an zumindest einer Seite, wobei die Kühlbleche (140) in je eine der schlitzförmigen Öffnungen (160a-e) der Halteplatte (150) einsteckbar sind und wobei die Kühlbleche (140) ausgebildet sind, um im eingesteckten Zustand mit der Halteplatte (150) eine Aufnahmetasche mit seitlicher thermischer Kontaktierungsmöglichkeit für die Wärmequelle, insbesondere das Energiespeicherelement (110), bilden.

2. Vorrichtung (100) gemäß Anspruch 1 zur Halterung und Kühlung von einer Mehrzahl von Energiespeicherelementen (110), **dadurch gekennzeichnet, dass** zumindest zwei weitere Kühlbleche (140) mit einem umgeknickten Rand (170) vorgesehen sind, die in die schlitzförmigen Öffnungen (160a-e) der Halteplatte (150) einsteckbar sind, wobei sich im eingesteckten Zustand in der Halteplatte (150) zumindest zwei Kühlbleche (140) berühren.

3. Vorrichtung (100) gemäß einem der Ansprüche 1 oder 2, **dadurch gekennzeichnet, dass** die Kühlbleche (140) an zumindest einem, vorzugsweise zwei, vorzugsweise drei Seiten einen umgeknickten Rand (170) aufweisen.

4. Vorrichtung (100) gemäß einem der Ansprüche 1 bis 3, **dadurch gekennzeichnet, dass** die schlitzförmigen Öffnungen (160a-e) in der Halteplatte (150) zumindest teilweise eine Form des Buchstabens H aufweisen.

5. Vorrichtung (100) gemäß einem der Ansprüche 1 bis 4, **dadurch gekennzeichnet, dass** eine schlitzförmige Öffnung (160c) in der Mitte der Halteplatte (150) eine geringere Öffnungsbreite aufweist als eine schlitzförmige Öffnung (160a, 160e) am Rand der Halteplatte (150).

6. Vorrichtung (100) gemäß Anspruch 5, **dadurch gekennzeichnet, dass** die Öffnungsbreiten von schlitzförmigen Öffnungen (160a-e) von der Mitte der Halteplatte (150) zu einem Rand der Halteplatte (150) hin zunehmend größer werden.

7. Vorrichtung (100) gemäß einem der Ansprüche 1 bis 6, **dadurch gekennzeichnet, dass** ferner eine Grundplatte (130) vorgesehen ist, an der die Halteplatte (150), insbesondere unter Verwendung einer Schraubverbindung (210) befestigbar ist.

8. Vorrichtung (100) gemäß einem Ansprüche 1 bis 7, **dadurch gekennzeichnet, dass** die Kühlbleche (140) und/oder die Grundplatte (130) ein Metall, insbesondere Aluminium enthalten.

9. Vorrichtung (100) gemäß einem der Ansprüche 1 bis 8, **dadurch gekennzeichnet, dass** die Halteplatte (150) ein Metall oder Kunststoff enthält.

10. Vorrichtung gemäß Anspruch 7 oder 8, **dadurch gekennzeichnet, dass** ferner eine Kühlplatte (190) vorgesehen ist, an der die Grundplatte (130), insbesondere unter Verwendung einer Schraubverbindung (210) befestigbar ist.

11. Vorrichtung (100) gemäß einem der Ansprüche 7 bis 10, **dadurch gekennzeichnet, dass** zwischen den Kühlblechen (140) und der Grundplatte (130) und/oder zwischen der Grundplatte (130) und der Kühlplatte (190) ein wärmeleitfähiges Material, insbesondere zumindest eine Folie oder Wärmeleitpaste angeordnet ist.

12. Vorrichtung (100) gemäß einem der Ansprüche 1 bis 11, **dadurch gekennzeichnet, dass** ferner ein Spannrahmen (120) vorgesehen ist, der ausgebildet ist, um im befestigten Zustand die Kühlbleche (140) seitlich an zumindest eine Wärmequelle, insbesondere ein Energiespeicherelement. (110), zu drücken, um einen thermischen Kontakt zwischen den Kühlblechen (140) und der Wärmequelle herzustellen.

13. Verfahren (250) zur Herstellung einer Halte- und Kühlungsvorrichtung (100) für zumindest eine Wärmequelle, insbesondere ein Energiespeicherelement (110), wobei das Verfahren (250) die folgenden Schritte aufweist:
- Bereitstellen (260) einer Halteplatte (150), die eine Mehrzahl von schlitzförmigen Öffnungen (160a-e) aufweist;
- Bereitstellen (270) von zumindest zwei Kühlblechen (140) mit einem umgeknickten Rand (170) an zumindest einer Seite, wobei die Kühlbleche (140) in je einen der schlitzförmigen Öffnungen (160a-e) der Halteplatte (150) einsteckbar sind und wobei die Kühlbleche (140) im eingesteckten Zustand mit der Halteplatte (150) eine Aufnahmetasche mit seitlicher thermischer Kontaktierungsmöglichkeit für die Wärmequelle, insbesondere das Energiespeicherelement (110), bilden; und
- Einstecken (280) der Kühlbleche (140) in unterschiedliche schlitzförmige Öffnungen (160a-e) der Halteplatte (150) bis der umgeknickte Rand (170) der Kühlbleche (140) die Halteplatte (150) berührt, um die Aufnahmetasche für die Wärmequelle, insbesondere das Energiespeicherelement (110), zu erhalten.

## Claims

1. A holding and fooling device (100) for at least one heat source, in particular an energy storage element (110), wherein the device (100) comprises the following features:
- a holding plate (150), which has a plurality of slit-like openings (160a-e); and
- at least two cooling sheets (140), each having a folded edge (170) on at least once side, therein the cooling sheets (140) can each be inserted into one of the slit-like openings (160a-e) in the holding plate (150), and wherein, when inserted, the cooling sheets (140) are designed so as two form a receiving pocket together with the holding plate (150), said pocket having lateral thermal contracting possibilities for the heat source, in particular the energy storage element (110).

2. The device (100) according to claim 1 for holding and cooling a plurality of energy storage elements (110), **characterized in that** at least two further cooling sheets (140) having a folded edge (170) are provided and can be inserted into slit-like openings (160a-e) in the holding plate (150), wherein, when inserted in the holding plate (150), at least two cooling sheets (140) are in contact.

3. The device (100) according to one of claims 1 or 2, **characterized in that** the cooling sheets (140) have a folder edge (170) at least can one side, preferably on two sides, preferably on three sides.

4. The device (100) according to one of claims 1 to 3, **characterized in that** the slit-like opening (160a-e) in the holding plate (150) are H-shaped, at least in part.

5. The device (100) according to one of claims 1 to 4, **characterized in that** a slit-like opening (160c) in the centre of the holding plate (150) has a smaller opening width than a slit-like opening (160a, 160e) at the edge of the holding plate (150).

6. The device (100) according to claim 5, **characterized in that** the opening widths of slit-like openings (160a-e) are increasingly larger from the centre of the holding plate (150) to an edge of the holding plate (150).

7. The device (100) according to one of claims 1 to 6, **characterized in that** a base plate (130) is also provided, to which the holding plate (150) can be fastened, in particular with use of a screw connection (210).

8. The device (100) according to one of claims 1 to 7, **characterized in that** the cooling sheets (140) and/or the base plate (130) contain a metal, in particular aluminium.

9. The device (100) according to one of claims 1 to 8, **characterized in that** the holding plate (150) contains a metal or plastic.

10. The device according to claim 7 or 8, **characterized in that** a cooling plate (190) is also provided, to which the base plate (130) can be fastened, in particular with use of a screw connection (210).

11. The device (100) according to one of claims 7 to 10, **characterized in that** a heat conductive material, in particular at least one foil or heat conductive paste, is arranged between the cooling sheets (140) and the base plate (130) and/or between the base plate (130) and the cooling plate (190).

12. The device (100) according to one of claims 1 to 11, **characterized in that** a tensioning frame (120) is alto provided, which is designed, in the fastened state, to press the cooling sheets (140) laterally against at least one heat source, in particular an energy storage element (110), so as to produce thermal contact between the cooling sheets (140) and the heat source.

13. A method (250) for producing a holding and cooling device (100) for at least one heat source, in particular an energy storage element (110), wherein the method (250) has the following steps:
- provision (260) of a holding plate (150), which has a plurality of slit-like openings (160a-e);
- provision (270) of at least two cooling sheets (140) having a folder edge (170) at least on one side, wherein the cooling sheets (140) can each be inverted into one of the slit-like openings (160a-e) in the holding plate (150), and wherein, when inserted, the cooling sheets (140) form a receiving pocket together with the holding plate (150), said pocket having lateral thermal contact possibilities for the heat source, in particular the energy storage element (110); and
- insertion (280) of the cooling sheets (140) into different slit-like openings (160a-e) in the holding plate (150) until the folded edge (170) of the cooling sheets (140) contacts the holding plate (150) so as to form the receiving pocket for the heat source, in particular the energy storage element (110).

## Revendications

1. Dispositif de retenue et de refroidissement (100) pour au moins une source de chaleur, en particulier un élément à accumulation d'énergie (110), où le dispositif (100) a les caractéristiques suivantes :
- une plaque de retenue (150) qui présente une pluralité d'ouvertures (160a-e) en forme de fente ; et
- au moins deux tôles de refroidissement (140) comportant chacune un bord replié (170) sur au moins un côté, où les tôles de refroidissement (140) peuvent être emboîtées dans chacune des ouvertures (160a-e) en forme de fente de la plaque de retenue (150) et où les tôles de refroidissement (140) sont configurées pour former, lorsqu'elles sont emboîtées avec la plaque de retenue (150), une poche de réception ayant latéralement une possibilité de mise en contact thermique pour la source de chaleur, en particulier l'élément à accumulation d'énergie (110).

2. Dispositif (100) selon la revendication 1, servant à la fixation et au refroidissement d'une pluralité d'éléments à accumulation d'énergie (110), **caractérisé en ce qu'**il est prévu au moins deux autres tôles de refroidissement (140) comportant un bord replié (170), tôles de refroidissement qui peuvent être emboîtées dans les ouvertures (160a-e) en forme de fente de la plaque de retenue (150), où au moins deux tôles de refroidissement (140) se touchent lorsqu'elles sont remboîtées dans la plaque de retenue (150).

3. Dispositif (100) selon l'une des revendications 1 ou 2, **caractérisé en ce que** les tôles de refroidissement (140) présentent un bord replié (170) sur au moins un, de préférence deux, de préférence trois côtés.

4. Dispositif (100) selon l'une quelconque des revendications 1 à 3, **caractérisé en ce que** les ouverture (160a-e) en forme de fente présentent, dans la plaque de retenue (150), au moins partiellement la forme de la lettre H.

5. Dispositif (100) selon l'une quelconque des revendications 1 à 4, **caractérisé en ce qu'**une ouverture (160c) en forme de fente présente, au milieu de la plaque de retenue (150), une largeur d'ouverture plus petite que celle d'une ouverture (160a, 160e) en forme de fente placée au bord de la plaque de retenue (150).

6. Dispositif (100) selon la revendication 5, **caractérisé en ce que** les largeurs d'ouvertures (160a-e) en forme de fente vont en augmentant à partir du milieu de la plaque de retenue (150) jusqu'à un bord de la plaque de retenue (150).

7. Dispositif (100) selon l'une quelconque des revendications 1 à 6, **caractérisé en ce qu'**il est prévu en outre une plaque de base (130) sur laquelle peut être vissée la plaque de retenue (150), en particulier en utilisant un assemblage à vis (210).

8. Dispositif (100) selon l'une quelconque des revendications 1 à 7, **caractérisé en ce que** les tôles de refroidissement (140) et / ou la plaque de base (130) contienent un métal, en particulier de l'aluminium.

9. Dispositif (100) selon l'une quelconque des revendication 1 à 8, **caractérisé en ce que** la plaque de retenue (150) contient un métal ou de la matière plastique.

10. Dispositif (100) selon la revendication 7 ou 8, **caractérisé en ce qu'**il est prévu en outre une plaque de refroidissement (190) sur laquelle peut être vissée la plaque de base (130), en particulier en utilisant un assemblage à vis (210).

11. Dispositif (100) selon l'une quelconque des revendications 7 à 10, **caractérisé en ce qu'**un matériau thermoconducteur, en particulier au moins une feuille ou une pâte thermoconductrice, peut être disposé entre les tôles de refroidissement (140) et la plaque de base (130) et / ou entre la plaque de base (130) et la plaque de refroidissement (190).

12. Dispositif (100) selon l'une quelconque des revendications 1 à 11, **caractérisé en ce qu'**il est prévu en outre un cadre de serrage (120) qui est configuré pour presser les tôles de refroidissement (140), lorsqu'elles sont fixées, latéralement contre au moins une source de chaleur, en particulier un élément à accumulation d'énergie (110), pour établir un contact thermique entre les tôles de refroidissement (140) et la source de chaleur.

13. Procédé (250) de fabrication d'un dispositif de retenue et de refroidissement (100) pour au moins une source de chaleur, en particulier un élément à accumulation d'énergie (110), où le procédé (250) présente les étapes suivantes consistant :
- à fournir (260) une plaque de retenue (250) qui présente une pluralité d'ouvertures (160a-e) en forme de fente ;
- à fournir (270) au moins deux tôles de refroidissement (140) comportant un bord replié (170) sur au moins un côté, où les tôles de refroidissement (140) peuvent être emboîtée dans chacune des ouvertures (160a-e) en forme de fente de la plaque de retenue (150) et où les tôles de refroidissement (140), lorsqu'elles sont emboîtées avec la plaque de retenue (150), forment une poche de déception ayant latéralement une possibilité de mise en contact athermique pour la source de chaleur, en particulier l'élément à accumulation d'énergie (110) ; et
- à remboîter (280) les tôles de refroidissement (140) dans différentes ouvertures (160a-e) en forme de fente de la plaque de retenue (150), jusqu'à ce que le bord replié (170) des tôles de refroidissement (140) touche la plaque de retenue (150), pour obtenir la poche de réception pour la source de chaleur, en particulier l'élément à accumulation d'énergie (110).
